# EUROPÄISCHE PATENTSCHRIFT

(11) **EP 2 631 505 B1**
(45) Veröffentlichungstag und Bekanntmachung des Hinweises auf die Patenterteilung: **23.07.2014**
(21) Anmeldenummer: 13155219.2
(22) Anmeldetag: 14.02.2013
(51) Int. Cl.: F16D 66/02

(54) **Reibbelagsverschleißsensor und Reibbelagsverschleißsensoranordnung**
Friction lining wear sensor and friction lining wear sensor assembly
Capteur d'usure de garniture de friction et ensemble de capteurs d'usure de garniture de friction

(30) Priorität: 23.02.2012 DE 102012003325
(43) Veröffentlichungstag der Anmeldung: 28.08.2013
(73) Patentinhaber: BOWA-electronic GmbH & Co. KG, 72810 Gomaringen (DE)
(72) Erfinder: Böttle, Bernd, 72138 Kirchentellinsfurt (DE); Sandtrock, Volker, 72127 Kusterdingen (DE)
(74) Vertreter: Schneider, Peter Christian

(56) Entgegenhaltungen:
- EP-A1- 0 464 347
- EP-A1- 2 175 158
- EP-A2- 0 206 487
- EP-A2- 1 243 807
- US-A- 5 692 585

## Beschreibung

### Gebiet der Erfindung

Die Erfindung betrifft einen Reibbelagsverschleißsensor, umfassend einen Sensorkopf mit einem Sensorkörper und einer Leiterschleife eines elektrischen Leiters, die den Sensorkörper umschlingt, und eine Leitungsanordnung, umfassend ein Leiterpaar mit einer Zuleitung zu und eine Ableitung von der Leiterschleife sowie eine das Leiterpaar umhüllende Leiterschutzhülle, wobei die Leiterschutzhülle zwischen einer am sensorkopffernen Ende des Leiterpaares angeordneten Stützbasis einerseits und einer am sensorkopfnahen Ende des Leiterpaares angeordneten Stützbasis andererseits abgestützt angeordnet ist, wobei das sensorkopfseitige Ende der Leiterschutzhülle kraftschlüssig auf dem Leiterpaar fixiert ist.

Die Erfindung betrifft weiter eine Reibbelagsverschleißsensoranordnung, umfassend eine Mehrzahl solcher Reibbelagsverschleißsensoren, deren Leiterschleifen seriell hintereinandergeschaltet sind.

### Stand der Technik

Derartige Reibbelagsverschleißsensoren sind bekannt aus der EP 2 175 158 A1. Solche Sensoren werden häufig in Kraftfahrzeugen eingesetzt, um dem Fahrer zu signalisieren, dass ein Bremsbelag eine kritische Verschleißgrenze erreicht hat. Das Wirkprinzip solcher Sensoren besteht darin, dass ein elektrischer Testleiter, der sich von der der Gegenreibfläche, z.B. der Bremsscheibe, abwandten Seite des Belags um eine definierte Tiefe in eine Ausnehmung des Belags hinein erstreckt, bei übermäßigem Verschleiß des Belags während des Reibvorgangs mit der Gegenreibfläche in Kontakt kommt und zerstört wird. Daraufhin kann ein elektrisches Testsignal nicht mehr über den Testleiter übertragen werden, was von einer geeignet eingerichteten Steuervorrichtung registriert und in ein entsprechendes Warnsignal übersetzt wird. Andere Ausführungsformen zielen nicht auf die Zerstörung des Testleiters sondern auf seinen elektrischen Kontakt mit der Gegenreibfläche ab, der dann ebenfalls von einer geeignet eingerichteten Steuervorrichtung registriert und in ein Warnsignal übersetzt werden kann.

Als ein typisches Verschleißteil werden solche Sensoren regelmäßig als Module geliefert, die bei jedem Reibbelagswechsel mit dem Reibbelag ausgetauscht werden. Die Module umfassen typischerweise einen Sensorkopf und eine Leiteranordnung. Der Sensorkopf umfasst einen Sensorkörper, der von einer Leiterschleife umschlungen ist. Die Leiterschleife wird dabei von einem isolierten oder nichtisolierten Kabel gebildet, das im Bereich der Leiteranordnung als antiparallel geführtes Leiterpaar vorliegt, wobei eine Ader des Leiterpaares als Zu- und die andere Ader als Ableitung der Leiterschleife angesehen werden kann. Obgleich der Begriff des Leiterpaares das Vorliegen zweier separater Leiter suggerieren könnte, wird der Fachmann verstehen, dass beide Adern des Leiterpaares und die Leiterschleife typischerweise aus einem einstückigen Kabel bestehen werden.

Die Leitungsanordnung umfasst neben dem Leiterpaar eine dieses umgebende Leiterschutzhülle. Diese ist typischerweise als Schlauch oder Rohr ausgebildet. Sie erstreckt sich zwischen einer sensorkopfnahen Stützbasis am sensorkopfnahen Ende des Leiterpaares und einer sensorkopffernen Stützbasis am sensorkopffernen Ende des Leiterpaares. Typischerweise ist die Leiterschutzhülle axial elastisch ausgebildet und zwischen den Stützbasen druckbelastet vorgespannt. Die sensorkopfferne Stützbasis wird häufig durch eine Kontaktierungsvorrichtung, insbesondere einen Stecker gebildet, mit dem ein elektrischer Kontakt zwischen dem Sensor und einem Steuergerät hergestellt werden kann. Die sensorkopfnahe Stützbasis ist bei dem bekannten Sensor gemäß der gattungsbildenden EP 2 175 158 A1 als ein einstückig mit dem Sensorkörper verbundener Stutzen ausgebildet, welcher nutenartige Führungskanäle aufweist, in denen die Adern des Leiterpaares geführt sind, und über den die auch radial elastische Leiterschutzhülle klemmend gestülpt ist. Je nach Nuttiefe der Führungskanäle liegt die Leiterschutzhülle dabei an den über den Nutrand hinausragenden Adern des Leiterpaares an und klemmt diese gegen den Nutgrund, oder die den Nutrand nicht überragenden Adern liegen locker in den Führungskanälen. Je nach Geometrie des Einzelfalls geht der Stutzen gerade oder gewinkelt vom Sensorkörper ab. Nachteilig dabei ist, dass für jede Einzelfallgeometrie ein eigener Sensorkörper (inklusive Stutzen) geschaffen werden muss. Die damit verbundenen Herstellungskosten sind erheblich. Auch ist die Vorkonfektionierung in Fällen, in denen Reibbelagsverschleißsensoranordnungen mit einer Mehrzahl miteinander verbundener Sensoren vorkonfektioniert werden sollen, aufwendig und fehleranfällig.

Aus der DE 1 045 259 B ist ein einfacher Sensorkopf bekannt, der aus einer Leiterschleife besteht, die in eine schmale, einseitig geschlossene Weichblechhülse eingeschoben ist, welche an ihrem offenen Ende mit dem Leiterpaar verquetscht ist. Die Hülse übernimmt damit die Aufgabe eines Sensorkopfes. Nachteilig ist, dass das Leiterpaar außerhalb des Sensorkopfes völlig ungeschützt ist.

Aus der WO 99/61813 A1 ist ein Sensorkopf bekannt, der aus einem einzelnen Leiter besteht, der in den hohlen Schaft eines stopfenartigen Sensorkörpers hineinragt, wobei der Sensorköper an seinem offenen Ende einen den Leiter umlenkenden Kragarm aufweist. Im Montageendzustand wird der Sensorkörper nahe einer Wandung und parallel zu dieser fixiert, wobei der umgelenkte und von einer Schutzhülle ummantelte Leiter durch eine Öffnung in der Wandung geführt ist. Dabei wird die Schutzhülle zwischen dem in die Öffnung hineinragenden Kragarm und der Innenwand der Öffnung geklemmt.

Aus der DE 38 71 742 T2 ist ein eine Leiterschleife tragender Sensorkörper bekannt, der in eine Öffnung eines Bremsbelagträgers eingesetzt ist. Ein axial elastischer Schutzschlauch, der sich zwischen dem Belagträger und einem rückwärtigen Stecker abstützt, umgibt in lockerer Umhüllung das aus dem Sensorkopf ragende Leiterpaar.

Aus der DE 92 15 810 U1 ist ein Sensorkopf mit einer in seinem Inneren geführten Leiterschleife bekannt, die in ein von einer Schutzhülle ummanteltes Leiterpaar mündet. Die Schutzhülle ragt dabei in das Innere des Sensorkopfes hinein. Der Sensorkopf ist von einem Sensorgehäuse umgeben und mit diesem so verquetscht, dass die von außen auf das Gehäuse aufgebrachten Quetschkräfte nach innen bis zur Schutzhülle und dem darin befindlichen Leiterpaar wirken.

### Aufgabenstellung

Es ist die Aufgabe der vorliegenden Erfindung, einen gattungsgemäßen Reibbelagsverschleißsensor derart weiterzubilden, dass ein größeres Spektrum an Einsatzmöglichkeiten erreicht wird.

### Darlegung der Erfindung

Diese Aufgabe wird in Verbindung mit den Merkmalen des Oberbegriffs von Anspruch 1 dadurch erfüllt, dass eine Klemmhülse auf dem Leiterpaar an dessen sensorkopfseitigem Ende aufgeklemmt ist und das sensorkopfseitige Ende der Leiterschutzhülle auf der Klemmhülse aufgeklemmt ist.

Die Erfindung verzichtet somit darauf, einen Teil des Sensorkörpers als sensorkopfnahe Stützbasis für die Leiterschutzhülle zu verwenden. Stattdessen wird die Leiterschutzhülle am Leiterpaar fixiert. Dies führt zu einer größeren Freiheit bei der geometrischen Auslegung des Sensorkörpers. Insbesondere ist der die Sensorköpfe beim Stand der Technik stark individualisierende Stutzen entbehrlich. Er kann folglich vollständig entfallen. Seine Aufgabe als Stützbasis für die Leiterschutzhülle wird von deren kraftschlüssiger Fixierung mit dem Leiterpaar übernommen. Unabhängig vom speziellen Ort der Anbringung können die Sensorkörper auch bei mehrere Sensoren umfassenden Anordnungen gleich gestaltet sein; der Abgang des Leiterpaares ist aufgrund der vorliegenden Erfindung vollkommen variabel.

Insbesondere ist erfindungsgemäß vorgesehen, dass eine Klemmhülse auf dem Leiterpaar an dessen sensorkopfseitigen Ende aufgeklemmt ist und das sensorkopfseitige Ende der Leiterschutzhülle auf der Klemmhülse aufgeklemmt ist. Die Klemmhülse bildet bei dieser Ausführungsform die sensorkopfnahe Stützbasis. Es handelt sich somit um eine mittelbare Fixierung der Schutzhülle auf dem Leiterpaar.

Bevorzugt beruht die Klemmung der Klemmhülse auf dem Leiterpaar und / oder die Klemmung der Leiterschutzhülle auf der Klemmhülse auf einer Radialelastizität des jeweils aufklemmten Elementes. So kann die Klemmhülse, die eine untermaßige, vorzugsweise formangepasste Durchführung für das Leiterpaar aufweist, aus einem elastischen Kunststoff gefertigt sein. Beim Aufschieben der Klemmhülse auf das Leiterpaar dehnt sich die untermaßige Durchführung und klemmt aufgrund der Materialelastizität der Hülse. Aufgrund der bevorzugten Formangepasstheit der Durchführung an das Leiterpaar wird eine Beschädigung des Leiterpaares durch Quetschung vermieden.

Alternativ oder zusätzlich kann vorgesehen sein, dass die Leiterschutzhülle selbst radial elastisch ausgebildet ist und ihr Innenquerschnitt so auf den Außenquerschnitt der Klemmhülse abgestimmt ist, dass er auf diesem klemmt. Letzteres kann dadurch unterstützt werden, dass die Klemmhülse auf ihrem Außenumfang wenigstens einen Klemmwulst aufweist. Der wenigstens eine Klemmwulst ist bevorzugt ringförmig ausgebildet, kann jedoch auch anders, beispielsweise noppenartig gestaltet sein. Dies führt zu einer lokalen Umfangvergrößerung der Klemmhülse, was die Fixierung der aufgeschobenen Leiterschutzhülle verbessert.

Wie grundsätzlich aus dem Stand der Technik bekannt, ist die Leiterschutzhülle bevorzugt axial elastisch ausgebildet und druckbelastet zwischen der sensorkopffernen und der sensorkopfnahen Stützbasis vorgespannt. Hierdurch wird gewährleistet, dass das Leiterpaar unabhängig von der speziellen Kabelverlegung am Einsatzort stets über seine gesamte Länge zwischen den beiden Stützbasen von der Leiterschutzhülle umhüllt und somit gegen Beschädigung geschützt ist.

Weitere Merkmale und Vorteile der Erfindung ergeben sich aus der nachfolgenden, speziellen Beschreibung und den Zeichnungen.

### Kurzbeschreibung der Zeichnungen

Es zeigen:
- Figur 1:: einen Sensorkörper,
- Figur 2:: einen Sensorkopf unter Verwendung des Sensorkörpers von Figur 1 in drei verschiedenen Stellungen der Leitungsanordnung,
- Figur 3:: eine Ausführungsform der sensorkopfseitigen Stützbasis in einem Montagezwischenzustand,
- Figur 4:: zwei Ansichten einer Ausführungsform einer Sensoranordnung zur Detektion von Reibbelagsschrägverschleiß,
- Figur 5:: eine Ausführungsform einer Sensoranordnung zur zweiseitigen Detektion von Reibbelagsverschleiß,
- Figur 6:: eine Darstellung zweier Anbringungsmöglichkeiten eines erfindungsgemäßen Sensors.

### Ausführliche Beschreibung bevorzugter Ausführungsformen

Gleiche Bezugszeichen in den Figuren weisen auf gleiche oder analoge Bauteile hin.

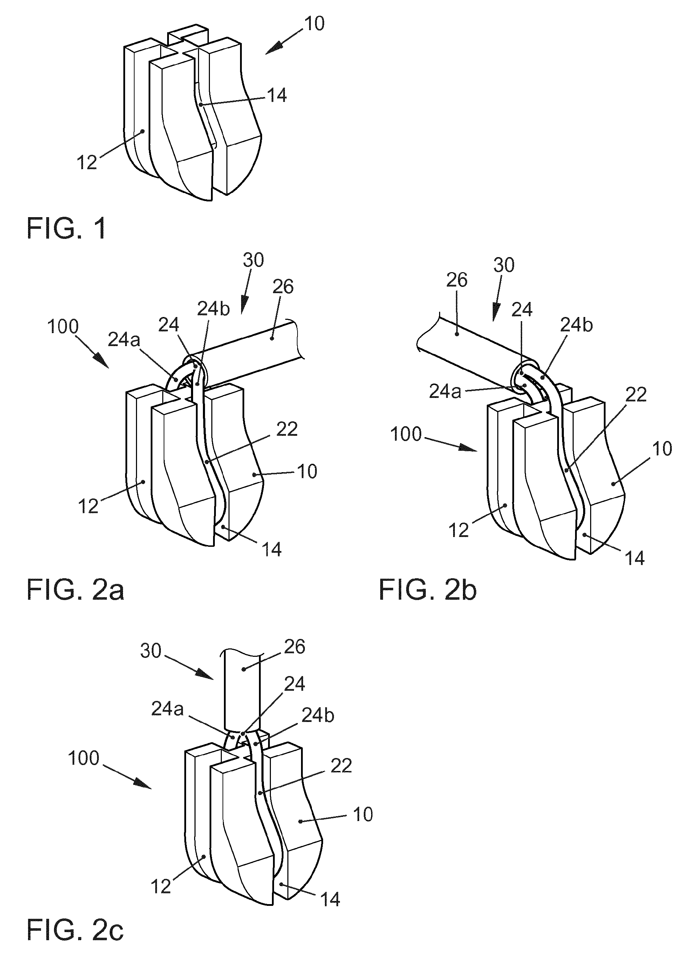

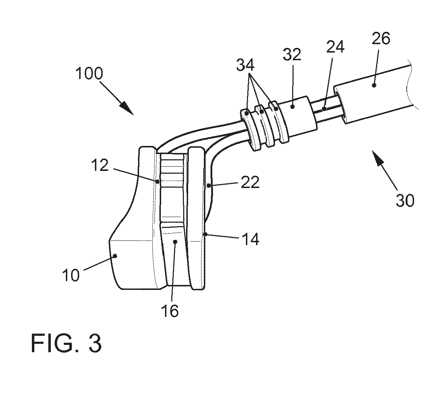

Figur 1 zeigt einen Sensorkörper 10, der zur Anwendung in einem erfindungsgemäßen Reibbelagsverschleißsensor geeignet ist. Der Sensorkörper 10 weist in seinen Seitenwänden zwei orthogonal zueinander stehende, den Sensorkörper 10 jeweils dreiseitig umlaufende Nuten auf, nämlich eine Befestigungsnut 12 und eine Leiterschleifennut 14. Die Befestigungsnut 12 ist zur Aufnahme einer lediglich in Figur 3 dargestellten Fixierungsfeder 16 bestimmt, mittels derer der Sensorkörper 10, wie schematisch in Figur 7 gezeigt, in einer Ausnehmung eines Reibbelags 18 an einem Reibbelagsträger 20 angebracht werden kann. Die Anbringung des Sensorkörpers 10 am Reibbelagsträger 20 ist in unterschiedlichen Varianten aus dem Stand der Technik bekannt und nicht Gegenstand der vorliegenden Erfindung. Es sei jedoch darauf hingewiesen, dass die vorliegende Erfindung ohne weiteres auch für Reibbelagsverschleißsensoren geeignet ist, die auf völlig andere Weise an Reibbelägen oder deren Trägern angebracht werden. Die Leiterschleifennut 14 ist zur Aufnahme einer Leiterschleife 22 bestimmt, wie dies in den Figuren 2, 3 und 5 bis 7 erkennbar ist. Ein besonderes Merkmal des Sensorkörpers 10 von Figur 1 ist es, dass er keinen abstehenden Stutzen aufweist, der, wie aus der Stand der Technik bekannt, der Zu- und Ableitung der Leiterschleife 22 eine Richtung vorgeben würde und einem Schutzschlauch eine Befestigungsbasis bieten könnte.

Figur 2 zeigt einen Reibbelagsverschleißsensorkopf 100, der den Sensorkörper 10 gemäß Figur 1 umfasst. Die Zu- und Ableitung der Leiterschleife 22 erfolgt über ein Leiterpaar 24 mit zwei Adern 24a, 24b. Man beachte, dass die Adern 24a, 24b im Regelfall über die Leiterschleife 22 einstückig miteinander verbunden sind. Die Bezeichnung als Leiterpaar 24 erfolgt lediglich zu Illustrationszwecken und deutet auf die antiparallele Führung der Adern 24a, 24b in der vom Sensorkopf 100, umfassend Sensorkörper 10 und Leiterschleife 22, abgehenden Leitungsanordnung 30 hin. Das Leiterpaar 24 ist von einer Schutzhülle 26 umhüllt, die als Schlauch oder Rohr ausgebildet sein kann.

Wie in Figur 2 dargestellt, ermöglicht die stutzenfreie Ausgestaltung des Sensorkörpers 10 eine beliebige Richtungsgebung der Leitungsanordnung 30. Beispielhaft sind in Figur 2 eine nach rechts abgeknickte (Teilfigur a), eine nach hinten abgeknickte (Teilfigur b) und eine gerade (Teilfigur c) Leitungsführung dargestellt. Der Fachmann wird verstehen, dass auch sämtliche Zwischenstadien und anders orientierte Richtungsgebungen möglich sind.

Durch den Wegfall des Stutzens ergibt sich das Problem einer fehlenden Stützbasis für die Schutzhülle 26. Figur 3 zeigt eine Ausführungsform der erfindungsgemäßen Lösung dieses Problems. Bei der Ausführungsform von Figur 3 ist eine Klemmhülse 32 auf das Leiterpaar 24 im Bereich seines sensorkopfseitigen Endes geschoben. Die Hülse 32 kann beispielsweise vor dem Umschlingen des Sensorkopfes 10 mit der Leiterschleife 22 über diese aufgeschoben werden. Alternativ ist es möglich, die Klemmhülse 32 so zu gestalten, dass sie über ihre Länge geöffnet werden kann. Beispielsweise könnte sie als zwei über ein Filmscharnier miteinander verbundene und verrastbare Teilschalen ausgebildet sein, was ihre Montage auch nach Einsetzen des Sensorkopfes 10 in die Leiterschleife 22 erlauben würde. In jedem Fall hat die Klemmhülse 32 das Leiterpaar 24 so fest zu umschließen, dass sie kraftschlüssig fixiert ist. Bei der konkreten Auslegung der Kraft werden Material- und Oberflächeneigenschaften des Klemmhülsenmaterials sowie des Leitermaterials, insbesondere dessen Kabelisolierung zu berücksichtigen sein, was jedoch für den Fachmann in Kenntnis der hier offenbarten Lehre unproblematisch ist. Figur 3 zeigt einen Montagezwischenzustand, in dem die Schutzhülle 26 noch nicht in ihrer Montageendposition liegt. In einem abschließenden Montageschritt wäre die Schutzhülle 26 nach vorne (links in Figur 3) zu schieben, sodass sie die Klemmhülse 32 umschließt. Aufgrund der Eigenelastizität von Schutzhülle 26 und / oder Klemmhülse 32 ergibt sich eine kraftschlüssige Verbindung. Bei der gezeigten Ausführungsform weist die Klemmhülse 32 mehrere Klemmwülste 34 auf, die den Kraftschluss zwischen Klemmhülse 32 und Schutzhülle 26 verstärken.

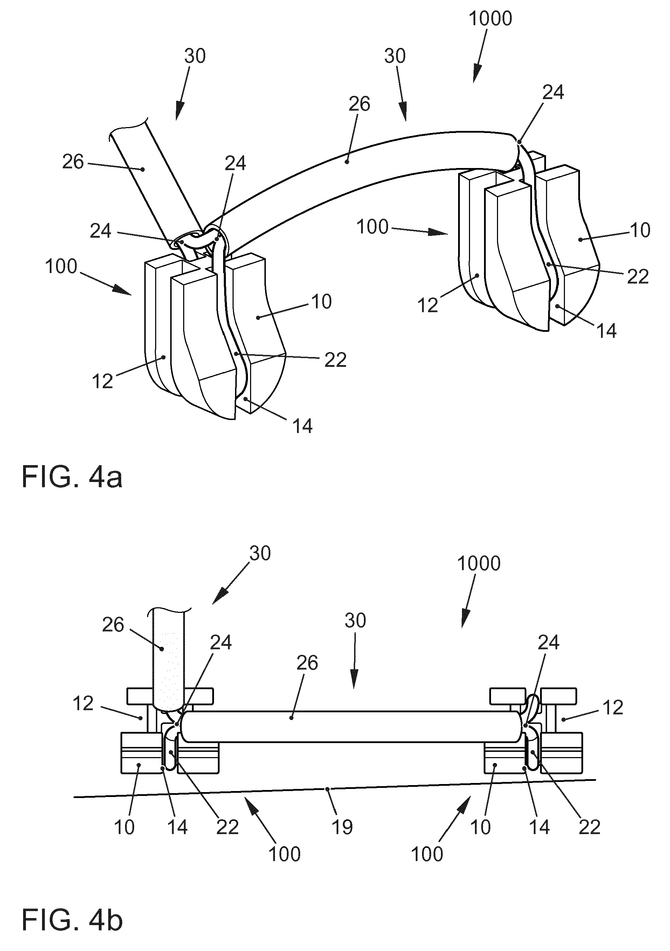

Figur 4 zeigt zwei Ansichten einer Sensoranordnung 1000, umfassend zwei Sensorköpfe 100, deren Leiterschleifen 22 seriell hintereinander geschaltet sind. Wie insbesondere in Teilfigur b erkennbar, eignen sich derartige Doppelsensoren zur Detektion eines Schrägverschleißes eines Reibbelags, der in Figur 4 nicht näher dargestellt ist; vielmehr ist in Figur 4 lediglich eine schematisch eingezeichnete schräge Verschleißlinie mit dem Bezugszeichen 19 gekennzeichnet. Man erkennt, dass sich die Leiterpaare 24 in diesem Fall nicht zwingend aus den beiden unmittelbaren Zu- bzw. Ableitungen der Leiterschleife 22 zusammensetzen müssen. So setzen sich die in Figur 4 vom linken Sensorkopf abgehenden Leiterpaare jeweils aus einer unmittelbaren und einer mittelbaren Zu- bzw. Ableitung der Leiterschleife 22 zusammen.

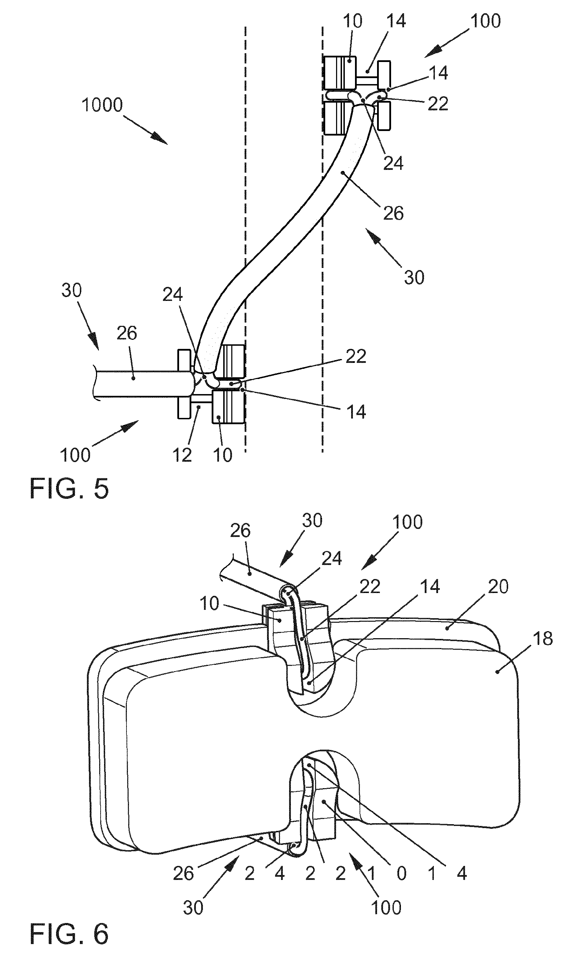

Figur 5 zeigt eine weitere Ausführungsform eines Doppelsensors 1000, der geeignet ist, den Verschleiß an zwei nicht dargestellten, auf einander gegenüberliegenden Seiten eines Reibgegenstücks, beispielsweise einer Bremsscheibe zu detektieren. Das entsprechende Element ist in Figur 5 ohne Bezugszeichen gestrichelt dargestellt.

Figur 6 zeigt schematisch die (standardmäßige) felgenseitige und die narbenseitige Anordnung je eines Sensorkopfs 100 an einem Reibbelagsträger 20 im Automobilbereich. Der Fachmann wird erkennen, dass eine doppelte Sensorauslegung wie in Figur 6 in der Praxis kaum Relevanz haben wird. Vielmehr wird in der Regel eine Entscheidung zugunsten einer der Varianten getroffen werden. Figur 6 dient insofern nur der Illustration.

Insgesamt ist erkennbar, dass die unterschiedlichsten Sensoranordnungen mit jeweils demselben Typ Sensorkörper möglich sind, was dem Wegfall des im Stand der Technik stets erforderlichen Stutzens und dem erfindungsgemäßen Ersatz seiner Funktion als Stützbasis geschuldet ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist die spezielle Formgebung des Sensorkörpers der Anpassung an den speziellen Einzelfall unterworfen. Neben den gezeigten Konfigurationen von Sensoranordnungen sind etliche weitere, hier nicht explizit offenbarte Varianten möglich, z.B. solche mit mehr als zwei Sensorköpfen, die der Fachmann jedoch im Angesicht der hier offenbarten Lehre gemäß den Anforderungen des Einzelfalls ohne weiteres aufzufinden vermag. Selbstverständlich ist es auch möglich, den erfindungsgemäßen Kraftschluss stoffschlüssig zu verstärken, z.B. durch zusätzliche Verklebung.

### Bezugszeichenliste

- 10: Sensorkörper
- 100: Sensorkopf
- 1000: Sensoranordnung
- 12: Befestigungsnut
- 14: Leiterschleifennut
- 16: Befestigungsfeder
- 18: Reibbelag
- 19: Verschleißlinie
- 20: Reibbelagsträger
- 22: Leiterschleife
- 24: Leiterpaar
- 24a,b: Einzeladern von 24
- 26: Schutzhülle
- 30: Leitungsanordnung
- 32: Klemmhülse
- 34: Klemmwulst

## Patentansprüche

1. Reibbelagsverschleißsensor, umfassend
- einen Sensorkopf (100) mit einem Sensorkörper (10) und einer Leiterschleife eines elektrischen Leiters, die den Sensorkörper (10) umschlingt, und
- eine Leitungsanordnung (30), umfassend ein Leiterpaar (24) mit einer Zuleitung zu und einer Ableitung von der Leiterschleife sowie eine das Leiterpaar (24) umhüllende Leiterschutzhülle (26),
wobei die Leiterschutzhülle (26) zwischen einer am sensorkopffernen Ende des Leiterpaares (24) angeordneten Stützbasis einerseits und einer am sensorkopfnahen Ende des Leiterpaares (24) angeordneten Stützbasis andererseits abgestützt angeordnet ist,
wobei das sensorkopfseitige Ende der Leiterschutzhülle (26) kraftschlüssig auf dem Leiterpaar (24) fixiert ist, **dadurch gekennzeichnet,**
**dass** eine Klemmhülse (32) auf dem Leiterpaar (24) an dessen sensorkopfseitigem Ende aufgeklemmt ist und das sensorkopfseitige Ende der Leiterschutzhülle (26) auf der Klemmhülse (32) aufgeklemmt ist.

2. Reibbelagsverschleißsensor nach Anspruch 1,
**dadurch gekennzeichnet,**
**dass** die Klemmung der Klemmhülse (32) auf dem Leiterpaar (24) und/oder die Klemmung der Leiterschutzhülle (26) auf der Klemmhülse (32) auf einer Radialelastizität des jeweils aufgeklemmten Elementes beruht.

3. Reibbelagsverschleißsensor nach Anspruch 2,
**dadurch gekennzeichnet,**
**dass** die Klemmhülse (32) auf ihrem Außenumfang wenigstens einen Klemmwulst (34) aufweist.

4. Reibbelagsverschleißsensor nach einem der vorangehenden Ansprüche,
**dadurch gekennzeichnet,**
**dass** die Leiterschutzhülle (26) axial elastisch ausgebildet und druckbelastet zwischen der sensorkopffernen und der sensorkopfnahen Stützbasis vorgespannt ist.

5. Reibbelagsverschleißsensoranordnung (1000), umfassend eine Mehrzahl von Reibbelagsverschleißsensoren nach einem der vorangehenden Ansprüche, deren Leiterschleifen (22) seriell hintereinandergeschaltet sind.

## Claims

1. A friction lining wear sensor comprising
- a sensor head (100) having a sensor body (10) and a conductor loop of an electrical conductor which surrounds the sensor body (10), and
- a wiring arrangement (30) comprising a pair of conductors (24) with an input into and an output from the conductor loop, as well as a protective sheath (26) surrounding the pair of conductors (24),
wherein the protective sheath (26) is arranged and supported between, on the one hand, a supporting base arranged at the end of the pair of conductors (24) which is distant from the sensor head and, on the other hand, a supporting base which is arranged at the end of the pair of conductors (24) which is close to the sensor head, wherein the end of the protective sheath (26) close to the sensor head is fixed non-positively to the pair of conductors (24),
**characterized in that**
a clamping sleeve (32) is clamped onto the pair of conductors (24) at the end of the said conductors which is close to the sensor head, and that the end of the protective sheath (26) close to the sensor head is clamped onto the clamping sleeve (32).

2. A friction lining wear sensor according to Claim 1,
**characterized in that**
the clamping of the clamping sleeve (32) onto the pair of conductors (24) and/or the clamping of the protective sheath (26) onto the clamping sleeve (32) is based on the radial elasticity of the respective attached element.

3. A friction lining wear sensor according to Claim 2,
**characterized in that**
the clamping sleeve (32) has at least one bead (34) on its outer circumference.

4. A friction lining wear sensor according to any of the preceding claims,
**characterized in that**
the protective sheath (26) is designed so as to be axially elastic and is pretensioned under pressure load between the supporting bases distant from and close to the sensor head.

5. A friction lining wear sensor assembly (1000) comprising a plurality of friction lining wear sensors according to any of the preceding claims, the conductor loops (22) of said sensors being serially cascaded

## Revendications

1. Détecteur d'usure de garniture de friction comprenant
- une tête de détecteur (100) présentant un corps de détecteur (10) et une boucle conductrice d'un conducteur électrique qui entoure le corps de détecteur (10), et
- un montage de câblage (30) comprenant une paire de conducteurs (24) dotés d'une entrée en direction et d'une sortie en provenance de la boucle conductrice, ainsi que d'une gaine de protection (26) entourant la paire de conducteurs (24), la gaine de protection (26) étant disposée et montée entre, d'une part, une base de soutien disposée à l'extrémité de la paire de conducteurs (24) qui est située à distance de la tête de détecteur et, d'autre part, une base de soutien disposée à l'extrémité de la paire de conducteurs (24) qui est située à proximité de la tête de détecteur, l'extrémité de la gaine de protection (26) à proximité de la tête de détecteur étant solidarisée par adhérence à la paire de conducteurs (24),
**caractérisé en ce que**,
un manchon de serrage (32) est serré sur la paire de conducteurs (24) à l'extrémité desdits conducteurs qui sont à proximité de la tête de détecteur, et l'extrémité de la gaine de protection (26) qui est à proximité de la tête de détecteur est serrée sur le manchon de serrage (32).

2. Détecteur d'usure de garniture de friction selon la revendication 1,
**caractérisé en ce que**
la solidarisation du manchon de serrage (32) à la paire de conducteurs (24) et/ou la solidarisation de la gaine de protection (26) au manchon de serrage (32) s'appuie sur l'élasticité radiale de l'élément solidarisé respectif.

3. Détecteur d'usure de garniture de friction selon la revendication 2,
**caractérisé en ce que**
le manchon de serrage (32) présente au moins un bourrelet (34) sur sa circonférence extérieure.

4. Détecteur d'usure de garniture de friction selon une quelconque des revendications précédentes,
**caractérisé en ce que**
la gaine de protection (26) est conçue de façon à être axialement élastique et est précontrainte sous la charge de pression entre les bases de soutien à distance et à proximité de la tête de détecteur.

5. Assemblage de détecteur d'usure de garniture de friction (1000) comprenant une pluralité de détecteurs d'usure de garniture de friction selon une quelconque des revendications précédentes, les boucles conductrices (22) desdits détecteurs étant montées en série en cascade.
